Europäisches Patentamt

European Patent Office

Office européen des brevets

(11) Veröffentlichungsnummer: **0 030 607**
**B1**

# EUROPÄISCHE PATENTSCHRIFT

(45) Veröffentlichungstag der Patentschrift:
**22.02.84**

(21) Anmeldenummer: **80106531.9**

(22) Anmeldetag: **24.10.80**

(51) Int. Cl.³: **B 62 D 13/02,** B 62 D 53/06,
B 60 D 1/00

(54) Vorrichtung zum Verhindern von Schlingerbewegungen eines Anhängers.

(30) Priorität. **12.12.79 DE 2949933**

(43) Veröffentlichungstag der Anmeldung:
**24.06.81 Patentblatt 81/25**

(45) Bekanntmachung des Hinweises auf die Patenterteilung:
**22.02.84 Patentblatt 84/8**

(84) Benannte Vertragsstaaten:
**DE FR GB IT NL SE**

(56) Entgegenhaltungen:
**DE - A - 2 520 693
DE - A - 2 741 120
DE - C - 902 223
DE - C - 959 974
GB - A - 1 532 535
US - A - 2 692 145
US - A - 3 101 959
US - A - 3 807 764
US - A - 3 810 521
US - A - 3 833 928
US - A - 4 065 148
US - A - 4 082 309**

(73) Patentinhaber: **WABCO Westinghouse
Fahrzeugbremsen GmbH, Am Lindener
Hafen 21 Postfach 91 12 80, D-3000 Hannover 91 (DE)**

(72) Erfinder: **Schönfeld, Karl-Heinrich Dr.,
Obentrautstrasse 68, D-3000 Hannover 21 (DE)**

(74) Vertreter: **Schrödter, Manfred, WABCO Westinghouse
Fahrzeugbremsen GmbH Am Lindener
Hafen 21 Postfach 91 12 80, D-3000 Hannover 91 (DE)**

## Vorrichtung zum Verhindern von Schlingerbewegungen eines Anhängers

Die Erfindung bezieht sich auf eine Vorrichtung zum Verhindern von Schlingerbewegungen eines Anhängers gemäß dem Oberbegriff des Patentanspruchs 1.

Lastzüge, bestehend aus Lastkraftwagen und Anhänger, werden hinsichtlich ihres Bewegungsverhaltens als stabilitätsgefährdet angesehen. Besonders bei schlechtem Straßenzustand (niedriger Reibwert) und oberhalb einer bestimmten Mindestgeschwindigkeit kann der Anhänger plötzlich ins Schlingern geraten. Dieser sporadisch auftretende unkontrollierte Fahrtzustand (auch Pendeln genannt) gefährdet sowohl den Lastzug selbst als auch den übrigen Verkehr.

Obwohl dieses Verhalten theoretisch und anhand von Fahrversuchen bereits untersucht worden ist, ist die Ursache des Schlingerns letzten Endes ungeklärt. Ein vollständiges mechanisches Ersatzmodell zur Beschreibung des Lastzuges ist sehr komplex. Ein vereinfachendes Modell eines gezogenen Pendels mit Reifen zeigt an der daraus leicht abzuleitenden Differentialgleichung daß unter gewissen Konfigurationen aus Masse, Länge und Reifeneigenschaften oberhalb einer bestimmten Mindestgeschwindigkeit ein Pendeln auftreten kann.

Es ist naheliegend, daß durch ein zwischen Lenkschemel und Aufbau des Anhängers wirksames dämpfendes Moment, das z. B. durch eine am Lenkschemel angreifende Bremse erzeugt werden kann, ein solches Pendeln des Fahrzeugverbundes sowie ein Aufschaukeln verhinderbar ist. Diese Lösung wirkt sich jedoch negativ auf die Lenkfähigkeit und den Reifenverschleiß des Fahrzeuges aus.

Weiterhin ist bekannt (DE-OS 2 741 120, DE-OS 2 520 693) bei Gelenkzügen, wie z. B. Sattelschleppern und Gelenkomnibussen einen Knickschutz vorzusehen. Dieser begrenzt die Einknickung des Fahrzeuges auf einen bestimmten höchstzulässigen Wert. Er erfüllt jedoch nicht den Zweck, eine Schlingerbewegung des Fahrzeuges zu verhindern.

Aufgabe der vorliegenden Erfindung ist es, eine Vorrichtung anzugeben, mit der ein Schlingern eines Anhängers wirksam vermieden werden kann. Hierbei soll jedoch die Lenkfähigkeit des Lastzuges erhalten bleiben und der Reifenverschleiß nicht erhöht werden.

Diese Aufgabe wird durch die im Patentanspruch 1 angegebene Erfindung gelöst.

Ein besonderer Vorteil der erfindungsgemäßen Lösung besteht darin, daß das Bremsmoment nur dann wirksam wird, wenn sich bei höheren Geschwindigkeiten ein Pendeln ankündigt. Die Regelung des Bremsmomentes erfolgt automatisch, da die Pendelbewegung nicht vom Fahrer erkannt oder kontrolliert werden kann.

Im folgenden soll die Funktionsweise der erfindungsgemäßen Vorrichtung anhand einer Zeichnung näher erläutert werden.

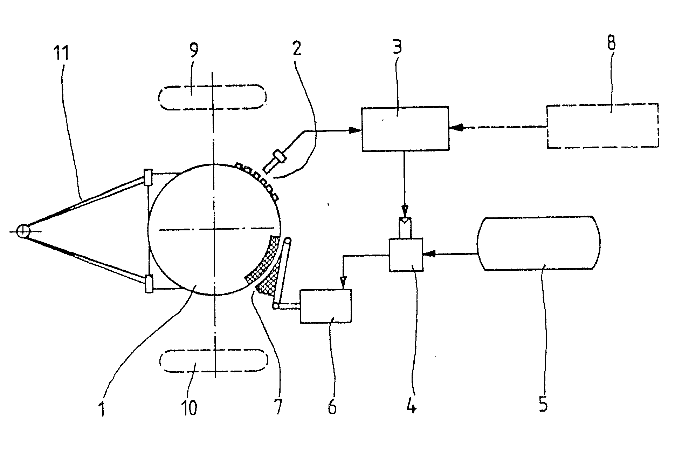

Die Zeichnung zeigt schematisch den vorderen Teil des Fahrgestells eines Anhängers. Die Vorderachse mit den beiden Rädern 9, 10 wird von einer Deichsel 11 gezogen. Auf der Vorderachse ist ein Fahrschemel 1 befestigt, auf dem der Anhänger-Aufbau drehbar aufliegt. Die Drehung des Fahrschemels 1 gegenüber dem Anhänger-Aufbau wird durch einen Sensor 2 abgetastet. Dieser kann — wie an sich bekannt — aus einem Zahnkranz und einem gegenüberliegenden feststehenden Fühler bestehen. Die Sensorsignale werden einer Elektronik 3 zugeführt. Diese berechnet aus den Signalen den Drehwinkel $\varphi$ sowie die Winkelgeschwindigkeit $d\varphi/dt$. Falls die berechneten Größen bestimmte in der Elektronik 3 festgelegte Grenzen überschreiten und damit ein sich ankündigendes Pendeln des Anhängers erkannt worden ist, gibt die Elektronik ein Ausgangssignal an ein pneumatisches Magnetventil 4 ab. Hierdurch wird das Ventil 4 geöffnet und die im Behälter 5 anstehende Druckluft auf einen Bremszylinder 6 geleitet. Dieser wirkt auf eine Bremse 7. Durch die Bremswirkung wird das sich ankündigende Schlingern des Anhängers beseitigt.

Da die Bremswirkung nur dann auftritt, wenn sich tatsächlich ein Schlingern angekündigt hat, wird die Lenkfähigkeit und der Reifenverschleiß bei normaler Fahrt nicht beeinträchtigt. Die Logik in der Elektronik 3 ist weiterhin auch derart ausgebildet, daß normale Lenkbewegungen nicht als ein Schlingern des Anhängers aufgefaßt werden.

Da das unkontrollierte Schlingern vorzugsweise ab einer gewissen Mindestgeschwindigkeit auftreten kann, ist für die Regelung des Bremsmomentes eine zusätzliche Information über die Fahrzeuggeschwindigkeit vorteilhaft. Diese kann der Elektronik 3 aus einer Antiblockiervorrichtung 8 zugeführt werden, sofern eine derartige Vorrichtung im Fahrzeug vorhanden ist.

### Patentansprüche

1. Vorrichtung zum Verhindern von Schlingerbewegungen eines Anhängers, wobei die Drehbewegung zwischen Lenkschemel (1) und Aufbau durch eine Bremseinrichtung (7) gehemmt ist, dadurch gekennzeichnet, daß die Drehbewegung durch einen Sensor (2) erfaßt wird und von einer Elektronik (3) bei unzulässigen Fahrtzuständen die Bremseinrichtung (7) betätigt wird.

2. Vorrichtung nach Anspruch 1, gekennzeichnet durch folgende Merkmale:
a) zur Überwachung der Drehbewegung des Lenkschemels (1) ist an dem Sensor (2) eine Elektronik (3) angeschlossen, deren Ausgang mit einem Magnetventil (4) verbunden ist;
b) durch das Magnetventil (4) ist mittels eines Druckluftbehälters (5) und eines Bremszylinders (6) die Bremseinrichtung (7) steuerbar.

3. Vorrichtung nach Anspruch 1 bis 2 bei einem Fahrzeug mit einer Antiblockiervorrichtung, dadurch gekennzeichnet, daß eine Verbindung zwischen der Elektronik (3) und der Antiblockiervorrichtung (8) zur Übermittlung der Fahrzeuggeschwindigkeit (V) vorgesehen ist.

## Claims

1. Arrangement for preventing the rolling motions of a trailer, in which the rotational movement between the steering swivel (1) and the body is inhibited by a brake device (7), characterised in that the rotational movement is detected by a sensor (2) and the brake device (7) is actuated by an electronic system (3) in the case of unfavourable travelling conditions.

2. Arrangement according to claim 1, characterised by the following features:
a) for monitoring the rotational movement of the steering swivel (1) there is connected to the sensor (2) an electronic system (3), the output of which is connected to a solenoid valve (4);
b) the brake device (7) can be controlled by the solenoid valve (4) by means of a compressed air container (5) and a brake cylinder (6).

3. Arrangement according to claims 1 and 2 in a vehicle having an anti-lock brake system, characterised in that there is provided a connection between the electronic system (3) and the anti-lock brake system (8) for transmitting the speed (V) of the vehicle.

## Revendications

1. Dispositif interdisant des mouvements de lacet d'une remorque, le mouvement de rotation entre la sellette de direction (1) et la carrosserie étant empêchée par un équipement de freinage (7), ledit dispositif étant caractérisé en ce que le mouvement de rotation est décelé par un capteur (2); et une électronique (3) actionne l'équipement de freinage (7) aux régimes inadmissibles.

2. Dispositif selon revendication 1, caractérisé en ce que:
a) une électronique (3) est reliée au capteur (2) pour surveiller le mouvement de rotation de la sellette de direction (1), et sa sortie est reliée à une électrovanne (4);
b) l'électrovanne (4) commande l'équipement de freinage (7) par l'intermédiaire d'un réservoir d'air comprimé (5) et d'un cylindre de frein (6).

3. Dispositif selon revendications 1 à 2, équipant un véhicule muni d'un dispositif antiblocage et caractérisé par une liaison entre l'électronique (3) et le dispositif antiblocage (8) pour détermination de la vitesse du véhicule (V).